# EUROPEAN PATENT SPECIFICATION

(11) **EP 3 054 434 B1**
(45) Date of publication and mention of the grant of the patent: **19.12.2018**
(21) Application number: 16153532.3
(22) Date of filing: 29.01.2016
(51) Int. Cl.: G08B 25/00, G08B 25/10

(54) **FAST BATCH ENROLL METHOD FOR RF6 SENSOR IN SECURITY PANEL**
SCHNELLES BATCHEINTRAGUNGSVERFAHREN FÜR RF6-SENSOR IN SICHERHEITSTAFEL
PROCÉDÉ D' INSCRIPTION DE LOT RAPIDE POUR UN CAPTEUR RF6 SUR UN PANNEAU DE SÉCURITÉ

(30) Priority: 04.02.2015 US 201514614040
(43) Date of publication of application: 10.08.2016
(73) Proprietor: Honeywell International Inc., Morris Plains, NJ 07950 (US)
(72) Inventor: GAO, Yekun, Morris Plains, NJ 07950 (US); LI, Zhonggui, Morris Plains, NJ 07950 (US); YE, Min, Morris Plains, NJ 07950 (US)
(74) Representative: Houghton, Mark Phillip

(56) References cited:
- WO-A1-2014/123629
- US-A1- 2012 124 799
- US-A1- 2014 266 687

## Description

### FIELD

This application relates to security systems and more particular to the set-up of such systems.

### BACKGROUND

Systems are known to protect people and assets within secured areas. Such systems are typically based upon the use of one more sensors that detect threats within the secured area.

Threats to people and assets may originate from any of number of different sources. For example, a fire may kill or injure occupants who have become trapped by a fire in a home. Similarly, carbon monoxide from a fire may kill people in their sleep.

Alternatively, an unauthorized intruder, such as a burglar, may present a threat to assets within the area. Intruders have also been known to injure or kill people living within the area.

In the case of intruders, sensors may be placed in different areas based upon the respective uses of those areas. For example, if people are present during some portions of a normal day and not at other times, then sensors may be placed along a periphery of the space to provide protection while the space is occupied while additional sensors may be placed within an interior of the space and used when the space is not occupied.

In most cases, threat detectors are connected to a local control panel. In the event of a threat detected via one of the sensors, the control panel may sound a local audible alarm. The control panel may also send a signal to a central monitoring station.

While security system work well, they are sometimes difficult to set up and use, especially when large numbers of sensors and different levels of security are involved. Accordingly, a need exists for better methods of expediting the setup of such systems.

Document US 2014/0266687 A1 describes a wireless security sensor registration method.

### SUMMARY OF THE INVENTION

The present invention is defined by the appended claims.

### BRIEF DESCRIPTION OF THE DRAWINGS

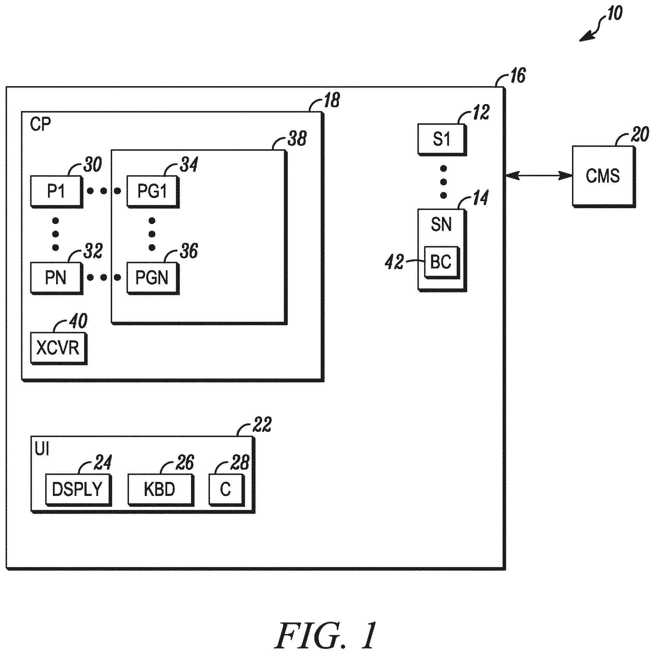

Fig. 1 illustrates a block diagram of a system in accordance herewith;

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

FIG. 1 depicts a security system 10 shown generally in accordance with an illustrated embodiment. Included within the security system may be a number of sensors 12, 14 used for detecting threats within a secured geographic area 16. Threats may originate from any of a number of different sources. For example, an intruder may represent a threat to people and/or assets within a home or business. Similarly, a fire or a gas leak may threaten the safety of those same people and/or assets.

Accordingly, the sensors may be embodied in any of a number of different forms. For example, at least some of the sensors may be limit switches placed on the doors and windows providing entry into and egress from the secured area. Some other of the sensors may be passive infrared (PIR) sensors placed within the secured area in order to detect intruders who have been able to circumvent the sensors along the periphery of the secured area. Still other of the sensors may be smoke and/or fire detectors.

Also included within the secured area is a control panel or controller 18. The control panel may be located within the secured area as shown in FIG. 1 or located remotely.

The control panel may monitor the sensors for activation. Upon activation of one of the sensors, the control panel may compose an alarm message and send it to a central monitoring station 20. The central monitoring station may response by summoning the appropriate help (e.g., police, fire department, etc.).

The security system may be controlled by a human user through use of a user interface 22. Included within the user interface may be a display 24 and a keyboard 26.

Located within the control panel, the user interface and each of the sensors may be one or more processor apparatus (processors) 30, 32, each operating under control of one or more computer programs 34, 36 loaded from a non-transitory computer readable medium (memory) 38. As used herein, reference to a step performed by a computer program is also reference to the processor that executed that step.

The security system may be armed and disarmed through the user interface. In this regard, an authorized user may enter a personal identification number (PIN) and an instruction. The instruction may be an arm instruction, an arm away and/or a disarm command.

A status processor may monitor the user interface for input from the human user. Upon detecting a PIN, the status processor may compare the entered PIN with the PINs of authorized users. If the entered PIN matches the PIN of an authorized user, then the status processor executes the instruction. If not, then the input may be ignored or an error message is generated.

In the armed state, an alarm processor monitors each of the sensors for activation. Upon detecting activation of one of the sensors, the alarm processor composes and sends an alarm message to the central monitoring station. The alarm message may include an identifier of the system (e.g., account number, street address, etc.), an identifier of the sensor and the time of activation.

In general, the sensors of FIG. 1 are wireless devices that each communicate with the control panel on one or more radio frequency channels. Accordingly, a respective radio frequency transceiver 40 located within the control panel and each of the sensors is provided in support of such wireless communication.

For example, the control panel may include one or more communication processors that define a super frame for communication between the control panel and sensors. The super frame, in turn, may be defined by a number of time division multiple access (TDMA) slots that re-occur over a predetermined time period. Some of the slots may be reserved for use by the sensors under a 6LowPan/IPv6/IoT protocol.

The super frame may include a slot reserved for a beacon and slots reserved for the exchange of messages between the sensors and the control panel under an IEEE 802.15.4 and/or 6LowPAN protocol. The beacon may identify a starting point of the super frame and incorporates a number of data fields that each define respective aspects of the superframe

Each sensor of the system of FIG. 1 may have a short address and an IPv6 (6LowPan) address and a MAC identifier (MAC ID). The addressing system facilitates accessing of the sensors by any other IPv6 compatible device as described in various Internet of Things (loT) publications. This allows the sensors to be arranged by respective processors into star or tree networks.

The status of the control panel (e.g., armed, disarmed, trouble, etc.) may be carried as part of the beacon payload. If necessary, a detailed indicator of panel status may also be carried within respective slots under the 6LowPAN/802.15.4 protocols. The control slots of the beacon may also be used to send request messages from the control panel to end devices (e.g., sensors, etc.) based upon the IEEE802.15.4 addresses of the end devices.

As noted above, any of a number of different types of devices may be incorporated into the system as sensors. The devices may be automatically enrolled into the system via an enrollment processor.

Under one illustrated embodiment, a television camera 28 within the user interface may be used to at least partially automate enrollment of the sensors into the system. The camera may be used to capture an image of a label 42 located on an outside surface of the sensor. The label may be encoded using an appropriate visual coding format (e.g., bar code, QR code, etc.). The label provides detailed information about the sensor (e.g., an identifier of the manufacturer, a model number, MAC ID, serial number, revision number, etc.).

In this regard, a decoding processor within the television camera or control panel decodes an image of the sensor label from the camera in order to recover registration information from the sensor. The recovered information may be saved as a white list pending registration of the sensor.

Once activated, the sensor begins by scanning an appropriate radio frequency spectrum for a beacon from the control panel. A registration processor within the sensor recovers a system identifier from the beacon as well as registration information (e.g., a format under which the sensor may register, a channel on which to send registration requests, etc.).

The registration processor sends then a registration request to the control panel. The registration request may include operational information (i.e., a profile) about the sensor (e.g., an identifier of the manufacturer, a model number, MAC ID, serial number, revision number, etc.).

Within the control panel, a corresponding registration processor receives the registration request and attempts to match the content of the registration request with an entry within the white list. Upon finding a match, the registration processor registers the sensor into the system and assigns the sensor to a particular zone of the secured area. To complete registration, the registration processor may assign the sensor to a particular slot of the superframe.

In general, the system of FIG. 1 offers a number of advantages over conventional systems. For example, currently available systems enroll RF6 sensors into a corresponding control panel under a manual learning mode using a number of predefined steps. First, a user (working through a control panel of a security system) enters into a zone programming screen and sends an enrollment mode command to an RF6 application (RF6AP) within the control panel. The user then removes and reinserts the battery into the RF 6 sensor, thereby causing the sensor to transmit a profile to the panel over a selected radio frequency channel. The profile is, in turn, displayed on the user interface. The user then compares the MAC address in the profile to the information printed on the outside of the sensor. If the information matches, the user saves the information into a file of a particular zone. The user may then step into the next zone and enroll the next sensor.

There are several problems with this process. For example, a user needs to wait several second (often more than 10 seconds) for the RF6 sensor and RF6AP of the network to pair (e.g., to recognize one another, to establish a communication connection, to exchange registration information, etc.). The user may then need to compare the MAC address in the profile received over the radio frequency channel with the printed information on the sensor in order to decide whether to accept the device, or not. This wastes a considerable amount of time.

In addition, the user may mistakenly accept a sensor belonging to another nearby system. When this happens, the user must delete that sensor and start over. Often removal of the wrong sensor requires special software tools. This adds to the installation costs.

The system of FIG. 6 solves these problems in a number of ways. First, the camera built into the user interface acts as a bar code scanner that scans each sensor's barcode to automatically form the sensors' MAC white list within the control panel, to provide that information to a registration processor and to display the white list on the user interface. The user may then remove and re-install the sensor's battery to pair the RF6 sensor with the security system network. The corresponding processor accepts the RF6 sensor as a corresponding zone type based on the sensor information in the scanned profile. This strategy based upon the MAC white list and upon camera scanning avoids mistakes caused by the presence of other nearby sensors. In effect, the scanning of profile information provides an automated pipeline enrollment operation that saves a considerable amount of installation time. The RF6 profile recovered from the camera image provides sufficient information to allow a registration processor to match and automatically enroll the sensor based upon zone type.

As a more specific example, the user of the user interface of FIG. 1 enters into a RF6 sensor batch learning mode by activating a corresponding icon on the user interface. The user may select a zone or zone type (or the system may do this automatically based upon a predefined list of zones). The user scans the barcode on the RF6 sensor using the camera and waits for the MAC address and associated information to appear in the white list. The user resets the sensor (e.g., by removing and re-installing the battery). When the profile arrives over the RF interface, the registration processor automatically enrolls the sensor into the corresponding zone. The process may then be repeated.

In general, the system includes a control panel of a security system that protects a secure geographic area, at least one sensor of the security system that detects threats within the secured area, a camera carried by the control panel, and a processor coupled to the camera that reads a printed code from the at least one sensor when the at least one sensor is placed in a field of view of the camera, decodes information from the read code and enrolls the at least one sensor with the control panel based upon the decoded information.

Alternatively, the system includes a security system that protects a secure geographic area, at least one sensor of the security system that detects threats within the secured area, a control panel of the security system that monitors the at least one sensor, a camera carried by the control panel and a processor coupled to the camera that reads a code from the at least one sensor when the at least one sensor is placed in a field of view of the camera, decodes information from the read code and enrolls the at least one sensor with the control panel based upon the decoded information.

Alternatively, the system includes a security system that protects a secure geographic area, at least one sensor of the security system that detects threats within the secured area, a controller of the security system that monitors the at least one sensor, a camera electrically coupled to the controller and a processor of the controller coupled to the camera that optically reads a code from the at least one sensor, decodes information from the read code and enrolls the at least one sensor with the control panel based upon the decoded information.

## Claims

1. An apparatus comprising:
a control panel of a security system that protects a secured geographic area;
a wireless sensor of the security system that detects threats within the secured geographic area;
a camera carried by the control panel; and
a processor coupled to the camera that reads a printed code from the wireless sensor when the wireless sensor is placed in a field of view of the camera, decodes identification information from the printed code, stores the identification information in a white list, receives a registration request including operational information from the wireless sensor after the wireless sensor is activated, and enrolls the wireless sensor with the control panel when the identification information matches the operational information,
wherein the processor enrolling the wireless sensor with the control panel comprises the processor assigning the wireless sensor to a slot in a super frame.

2. The apparatus as in claim 1 wherein the printed code comprises a bar code or a QR code.

3. The apparatus as in claim 1 wherein the identification information comprises one or more of a MAC address of the wireless sensor, a manufacturer of the wireless sensor, a model number of the wireless sensor, and a revision code of the wireless sensor.

4. The apparatus as in claim 1 wherein the processor enrolls the wireless sensor within a zone of the secured geographic area.

5. The apparatus as in claim 1 further comprising a display of the security system that displays the identification information.

## Patentansprüche

1. Einrichtung, umfassend:
eine Bedientafel eines Sicherheitssystems, das einen gesicherten geografischen Bereich schützt;
einen drahtlosen Sensor des Sicherheitssystems, der Bedrohungen innerhalb des gesicherten geografischen Bereichs erkennt;
eine Kamera, die von der Bedientafel getragen wird; und einen Prozessor, der mit der Kamera gekoppelt ist, welche einen gedruckten Code vom drahtlosen Sensor abliest, wenn der drahtlose Sensor in einem Gesichtsfeld der Kamera platziert wird, Identifikationsinformationen aus dem gedruckten Code decodiert, die Identifikationsinformationen in einer Weißliste ("White List") speichert, eine Registrierungsaufforderung empfängt, welche Betriebsinformationen vom drahtlosen Sensor beinhaltet, sobald der drahtlose Sensor aktiviert ist, und den drahtlosen Sensor bei der Bedientafel anmeldet, wenn die Identifikationsinformationen den Betriebsinformationen entsprechen,
wobei das Anmelden des drahtlosen Sensors bei der Bedientafel durch den Prozessor umfasst, dass der Prozessor den drahtlosen Sensor einem Schlitz in einem Superrahmen zuweist.

2. Einrichtung nach Anspruch 1, wobei der gedruckte Code einen Strichcode oder einen QR-Code umfasst.

3. Einrichtung nach Anspruch 1, wobei die Identifikationsinformationen eines oder mehrere von einer MAC-Adresse des drahtlosen Sensors, einem Hersteller des drahtlosen Sensors, einer Modellnummer des drahtlosen Sensors und einem Versionscode des drahtlosen Sensors umfassen.

4. Einrichtung nach Anspruch 1, wobei der Prozessor den drahtlosen Sensor in einer Zone des gesicherten geografischen Bereichs anmeldet.

5. Einrichtung nach Anspruch 1, ferner eine Anzeige des Sicherheitssystems umfassend, die die Identifikationsinformationen anzeigt.

## Revendications

1. Appareil, comprenant :
un panneau de commande d'un système de sécurité qui protège une région géographique sécurisée ;
un capteur sans fil du système de sécurité qui détecte des menaces au sein de la région géographique sécurisée ;
une caméra portée par le panneau de commande ; et
un processeur couplé à la caméra qui lit un code imprimé depuis le capteur sans fil lorsque le capteur sans fil est placé dans un champ de vision de la caméra, décode des informations d'identification depuis le code imprimé, stocke les informations d'identification dans une liste blanche, reçoit une requête d'enregistrement comportant des informations opérationnelles depuis le capteur sans fil suite à l'activation du capteur sans fil et inscrit le capteur sans fil auprès du panneau de commande lorsque les informations d'identification concordent avec les informations opérationnelles,
l'inscription, par le processeur, du capteur sans fil auprès du panneau de commande comprenant l'assignation, par le processeur, du capteur sans fil à un créneau dans une supertrame.

2. Appareil selon la revendication 1, dans lequel le code imprimé comprend un code-barres ou un code QR.

3. Appareil selon la revendication 1, dans lequel les informations d'identification comprennent un ou plusieurs éléments dans le groupe constitué par une adresse MAC du capteur sans fil, un fabricant du capteur sans fil, un numéro de modèle du capteur sans fil et un code de révision du capteur sans fil.

4. Appareil selon la revendication 1, dans lequel le processeur inscrit le capteur sans fil au sein d'une zone de la région géographique sécurisée.

5. Appareil selon la revendication 1, comprenant en outre un affichage du système de sécurité qui affiche les informations d'identification.
